# EUROPEAN PATENT SPECIFICATION

(11) **EP 4 612 843 B1**
(45) Date of publication and mention of the grant of the patent: **02.12.2026**
(21) Application number: 23794119.0
(22) Date of filing: 19.10.2023
(51) Int. Cl.: H04L 9/08

(54) **METHOD FOR CONTROLLING SERVICE DEMAND OF QUANTUM ENTANGLEMENT GENERATION IN QUANTUM NETWORK**
VERFAHREN ZUR STEUERUNG DER DIENSTANFRAGE EINER QUANTENVERSCHRÄNKUNGSERZEUGUNG IN EINEM QUANTENNETZWERK
PROCÉDÉ DE COMMANDE DE DEMANDE DE SERVICE DE GÉNÉRATION D'ENCHEVÊTREMENT QUANTIQUE DANS UN RÉSEAU QUANTIQUE

(30) Priority: 04.11.2022 NL 2033468
(43) Date of publication of application: 10.09.2025
(73) Proprietor: Technische Universiteit Delft, 2628 CN Delft (NL)
(72) Inventor: GAUTHIER, Scarlett Savannah, 2600 AA DELFT (NL); VARDOYAN, Gayane Sargisovna, 2600 AA DELFT (NL); WEHNER, Stephanie Dorothea Christine, 2600 AA DELFT (NL)
(74) Representative: Algemeen Octrooi- en Merkenbureau B.V.
(86) International application number: PCT/NL2023/050550
(87) International publication number: WO 2024/096732

(56) References cited:
- US-A1- 2021 176 055
- FRANCISCO FERREIRA DA SILVA ET AL: "Optimizing Entanglement Generation and Distribution Using Genetic Algorithms", ARXIV.ORG, CORNELL UNIVERSITY LIBRARY, 201 OLIN LIBRARY CORNELL UNIVERSITY ITHACA, NY 14853, 2 November 2020 (2020-11-02), XP081951269, DOI: 10.1088/2058-9565/ABFC93
- GUUS AVIS ET AL: "Requirements for a processing-node quantum repeater on a real-world fiber grid", ARXIV.ORG, CORNELL UNIVERSITY LIBRARY, 201 OLIN LIBRARY CORNELL UNIVERSITY ITHACA, NY 14853, 21 July 2022 (2022-07-21), XP091276996

## Description

### TECHNICAL FIELD

The present disclosure generally relates to controlling service allocation. Particular embodiments relate to methods and network nodes for controlling service demand, and to a related computer program and computer-readable storage medium.

### BACKGROUND

Classical communication networks such as the internet or the telephone network employ control methods to coordinate connections and data transfers in the network. In the domain of such networks, control methods dictate the rate at which data can be sent over the network by different application classes, depending on their requirements and priority levels. In classical networks, components called routers typically have switch capabilities and can direct traffic from different sources along various links depending on network conditions and the target destination of the traffic. By directing traffic in such a manner, routers temporarily allocate specific fractions of the bandwidth along pathways of links in the network to source-destination flows of information. Different flows have different bandwidth requirements, and the routers employ control methods to calculate allocations which maximize the utility of the network. In general, all major networks utilize the same control methods to ensure interoperability of smaller sub-networks with larger networks as well as to enforce a universal set of requirements for allowing devices to connect to the network.

The state of the art of control of quantum networks primarily consists of two types of preliminaries: literature introducing a framework for developing a network control plane and in complement a small-scale experimental demonstration of quantum device control via a network controller. In literature, several articles have addressed the development of a quantum network stack. In the network stack framework, the two most relevant concepts are that of the physical and link layers. The physical layer of a network encompasses the quantum devices, associated electronics, and physical connections between devices. The role of the link layer is to coordinate the robust delivery of entanglement between nodes. A state-of-the-art demonstration consisted of fully automated control from the link layer directing the physical layer of a two-node quantum network. In this proof of principle demonstration quantum network applications were executed using fully programmed command routines. The meaning of the proof of principle demonstration is that the link layer has been shown, in a simple quantum network, to be an effective control plane.

The publication "Optimizing Entanglement Generation and Distribution Using Genetic Algorithms" by Ferreira da Silva et al, discloses a network comprising a plurality of network nodes configured to request a service of quantum entanglement generation, and a plurality of resource nodes configured to deliver a service of quantum entanglement generation. A plurality of service requests for quantum entanglement generation is obtained from a subset of network nodes, and a central price for the service is determined.

### SUMMARY

The inventors have identified that there nevertheless still remain concerns with reliability of the above-described proof of principle, and that the proof of principle is too restricted by applying only to two users.

Thus, it is an aim for at least some embodiments according to the present disclosure to improve reliability of service delivery of entanglement between nodes. It is another aim for at least some embodiments according to the present disclosure to support larger numbers of users.

Accordingly, there is provided in a first aspect of the present disclosure a computer-implemented method for controlling service demand in a network; the network comprising a plurality of network nodes configured to request a service of quantum entanglement generation, a plurality of resource nodes configured to deliver a service of quantum entanglement generation, a switch coupling the plurality of network nodes with the plurality of resource nodes, and a controller configured for controlling the switch; the method comprising, at the controller:
- obtaining from at least a subset of the plurality of network nodes a plurality of service requests for quantum entanglement generation;
- determining a central price for the service, based on the obtained plurality of service requests, based on a service capacity of the plurality of resource nodes and based on a plurality of previous session rates, taking into account a maximum rate of the switch; and
- communicating the central price to at least the subset of the plurality of network nodes.

In this way, the service requests may be directly controlled, by establishing a system to alter these service requests, e.g. requested rates. It may be assumed that the switch is configured to create a schedule based on received service requests, wherein the schedule is configured to control resource/service allocation. The rate control protocol operated in part by the above-described method can be thought of as controlling how the network nodes interact with the switch. For the network nodes it is a protocol dictating how to request service from the network. For the network it is a protocol for collaborating with the network nodes to ensure the possibility of providing stable service which approximately achieves a target quality of service metric.

The method moreover allows taking into account an individual benefit each network node of the plurality of network nodes obtains from the allocated resource scheduling; and taking into account a collective benefit the plurality of network nodes obtains from the allocated resource scheduling.

In a particular embodiment, the method further comprises, preferably at the controller or at the switch:
- determining an allocation schedule for allocating the plurality of resource nodes to the plurality of network nodes, based on a plurality of session rates obtained from the plurality of network nodes.

It is noted as an example that the rate control method may dictate how communication sessions should fix their rates. At each time slot, every communication session may be arranged to communicate a message to the switch, which message includes an updated rate as well as a number of single entanglement requests (requests for a single entangled pair) to be submitted to the controller. The number of single entanglement requests submitted may be a sample of a Bernoulli random variable with expectation value equal to the request rate of session s. The controller may be configured to store only the most recently declared rate request value but may be configured to maintain queues of the single entanglement requests. A separate queue of requests may be dedicated to each communication session s. The queues of requests may form the basis for calculating a schedule. As a scheduling method, Maximum Weight Scheduling may be used. Whenever there is sufficient demand, the switch may schedule the H sessions with the longest queues. Fewer than H sessions may be scheduled if there are insufficient requests queued.

In a particular embodiment, an initial iteration of the central price is set at zero and an initial iteration of the previous session rates is set at a maximum possible rate for each corresponding session, ${λ}_{Herald , s}^{max}$.

In a particular embodiment, the service capacity of the plurality of resource nodes is based on the number of resource nodes and is based on a plurality of respective probabilities of the plurality of resource nodes to generate quantum entanglement.

In a particular embodiment, the plurality of service requests comprises a plurality of requests for desired delivery of a specified average rate of quantum entanglement generation from the plurality of resource nodes.

Also, there is provided in a second aspect of the present disclosure a computer-implemented method for controlling service demand in a network; the network comprising a plurality of network nodes configured to request a service of quantum entanglement generation, a plurality of resource nodes configured to deliver a service of quantum entanglement generation, a switch coupling the plurality of network nodes with the plurality of resource nodes, and a controller configured for controlling the switch; wherein a subset or a totality of the plurality of nodes is involved in a plurality of sessions, wherein each session of the plurality of sessions is associated with a network node designated as a master network node to communicate with the controller and is further associated with another network node designated as a slave network node to refrain from communication with the controller; the method comprising, at a master network node of the plurality of network nodes, the master network node being associated with at least one session of the plurality of sessions:
- obtaining from the controller a central price; and
- for each session of the at least one session, receiving a previous node price from the respective slave network node associated with said session;
- determining a new node price, based on a backlog of at least one previous transmitted service request for quantum entanglement generation from each session of the at least one session, and based on at least one most recent rate request from each session of the at least one session, taking into account a maximally supported rate for the network node;
- for each session of the at least one session, determining a session rate, based on the central price and at least one previous node price, taking into account a minimum session rate value, a maximum session rate value, and a utility function encoding a target metric and a fairness metric; and
- for each session of the at least one session, sending the session rate to the controller.

It will be appreciated that considerations and advantages applying to any above-described embodiment may analogously apply to this embodiment, *mutatis mutandis.*

This advantageously both distributes and reduces the computational efforts, as neither the central controller, nor each and every network node, but rather the central controller and a select group of network nodes is tasked with determining session rate, user price, and central price. It is also advantageous that the controller does not need to know the particular utility functions chosen by the network nodes - i.e. the controller does not need to have knowledge of the nodes' target metric / notion of fairness.

The rate control protocol operated in part by the above-described method can be thought of as controlling how the network nodes interact with the switch. As stated, for the network nodes it is a protocol dictating how to request service from the network. For the network it is a protocol for collaborating with the network nodes to ensure the possibility of providing stable service which approximately achieves a target quality of service metric.

In a particular embodiment, the fairness metric is defined such that, if a session rate would be increased, then a sum of fractions of change of session rates would be non-positive.

In a particular embodiment, an initial iteration of the session rate is set at a maximum session rate for each corresponding session, ${λ}_{Herald , s}^{max}$.

Also, there is provided in a third aspect of the present disclosure computer-implemented method for controlling service demand in a network; the network comprising a plurality of network nodes configured to request a service of quantum entanglement generation, a plurality of resource nodes configured to deliver a service of quantum entanglement generation, a switch coupling the plurality of network nodes with the plurality of resource nodes, and a controller configured for controlling the switch; wherein a subset or a totality of the plurality of nodes is involved in a plurality of sessions, wherein each session of the plurality of sessions is associated with a network node designated as a master network node to communicate with the controller and is further associated with another network node designated as a slave network node to refrain from communication with the controller; the method comprising, at a slave network node of the plurality of network nodes, the slave network node being associated with at least one session of the plurality of sessions:
- obtaining from the controller a central price;
- determining a new node price, based on a backlog of at least one previous transmitted service request for quantum entanglement generation from each session of the at least one session, and based on at least one most recent rate request from each session of the at least one session, taking into account a maximally supported rate for the network node; and
- for each session of the at least one session, sending the new node price to the respective master network node associated with said session.

It will be appreciated that considerations and advantages applying to any above-described embodiment may analogously apply to this embodiment, *mutatis mutandis.* In a particular embodiment, the controller is externally connected with the plurality of quantum entanglement generation resource nodes and internally comprises only non-quantum resources.

In a particular embodiment, the switch couples the plurality of network nodes with the plurality of resource nodes via a crossbar topology, wherein any resource node of the plurality of resource nodes is allocatable to any subset of network nodes of the plurality of network nodes.

In a particular embodiment, the plurality of physical resources comprises a plurality of heralding stations. In an alternative embodiment, the plurality of physical resources comprises a plurality of photon sources, and the switch is configured for transmitting photons, and each network node of the plurality of network nodes comprises at least a photon detector.

Also, there is provided in a fourth aspect of the present disclosure computer program comprising instructions configured for, when executed by at least one processor, performing the method of any preceding claim.

It will be appreciated that considerations and advantages applying to any above-described embodiment may analogously apply to this embodiment, *mutatis mutandis.*

Also, there is provided in a fifth aspect of the present disclosure computer-readable storage medium storing the computer program of claim 11.

Also, there is provided in a sixth aspect of the present disclosure controller for controlling service demand in a network; the network comprising a plurality of network nodes configured to request a service of quantum entanglement generation, a plurality of resource nodes configured to deliver a service of quantum entanglement generation, and a switch coupling the plurality of network nodes with the plurality of resource nodes; the controller comprising:
- a receiver configured for obtaining from at least a subset of the plurality of network nodes a plurality of service requests for quantum entanglement generation;
- a calculation unit configured for determining a central price for the service, based on the obtained plurality of service requests, based on a service capacity of the plurality of resource nodes and based on a plurality of previous session rates, taking into account a maximum rate of the switch; and
- a transmitter configured for communicating the central price to at least the subset of the plurality of network nodes.

It will be appreciated that considerations and advantages applying to any above-described embodiment may analogously apply to this embodiment, *mutatis mutandis.*

Also, there is provided in a seventh aspect of the present disclosure network node for controlling service demand in a network; the network comprising a plurality of network nodes configured to request a service of quantum entanglement generation, a plurality of resource nodes configured to deliver a service of quantum entanglement generation, a switch coupling the plurality of network nodes with the plurality of resource nodes, and a controller configured for controlling the switch; wherein a subset or a totality of the plurality of nodes is involved in a plurality of sessions, wherein each session of the plurality of sessions is associated with a network node designated as a master network node to communicate with the controller and is further associated with another network node designated as a slave network node to refrain from communication with the controller; the network node being designated as a master network node and being associated with at least one session of the plurality of sessions; the network node comprising:
- a receiver configured for:
   - obtaining from the controller a central price; and
   - for each session of the at least one session, receiving a previous node price from the respective slave network node associated with said session;
- a calculation unit configured for
   - determining a new node price, based on a backlog of at least one previous transmitted service request for quantum entanglement generation from each session of the at least one session, and based on at least one most recent rate request from each session of the at least one session, taking into account a maximally supported rate for the network node; and
   - for each session of the at least one session, determining a session rate, based on the central price and at least one previous node price, taking into account a minimum session rate value, a maximum session rate value, and a utility function encoding a target metric and a fairness metric; and
- a transmitter configured for, for each session of the at least one session, sending the session rate to the controller.

It will be appreciated that considerations and advantages applying to any above-described embodiment may analogously apply to this embodiment, *mutatis mutandis.*

For example, in a particular embodiment, the fairness metric is defined such that, if a session rate would be increased, then a sum of fractions of change of session rates would be non-positive.

Also, there is provided in an eighth aspect of the present disclosure network node for controlling service demand in a network; the network comprising a plurality of network nodes configured to request a service of quantum entanglement generation, a plurality of resource nodes configured to deliver a service of quantum entanglement generation, a switch coupling the plurality of network nodes with the plurality of resource nodes, and a controller configured for controlling the switch; wherein a subset or a totality of the plurality of nodes is involved in a plurality of sessions, wherein each session of the plurality of sessions is associated with a network node designated as a master network node to communicate with the controller and is further associated with another network node designated as a slave network node to refrain from communication with the controller; the network node being designated as a slave network node and being associated with at least one session of the plurality of sessions; the network node comprising:
- a receiver configured for obtaining from the controller a central price;
- a calculation unit configured for determining a new node price, based on a backlog of at least one previous transmitted service request for quantum entanglement generation from each session of the at least one session, and based on at least one most recent rate request from each session of the at least one session, taking into account a maximally supported rate for the network node; and
- a transmitter configured for, for each session of the at least one session, sending the new node price to the respective master network node associated with said session.

It will be appreciated that considerations and advantages applying to any above-described embodiment may analogously apply to this embodiment, *mutatis mutandis.*

### BRIEF DESCRIPTION OF THE DRAWINGS

The embodiments described above are merely provided for illustrative purposes and are not meant to limit the present invention, which will be more fully understood with the help of the following detailed description and the appended drawing, in which:

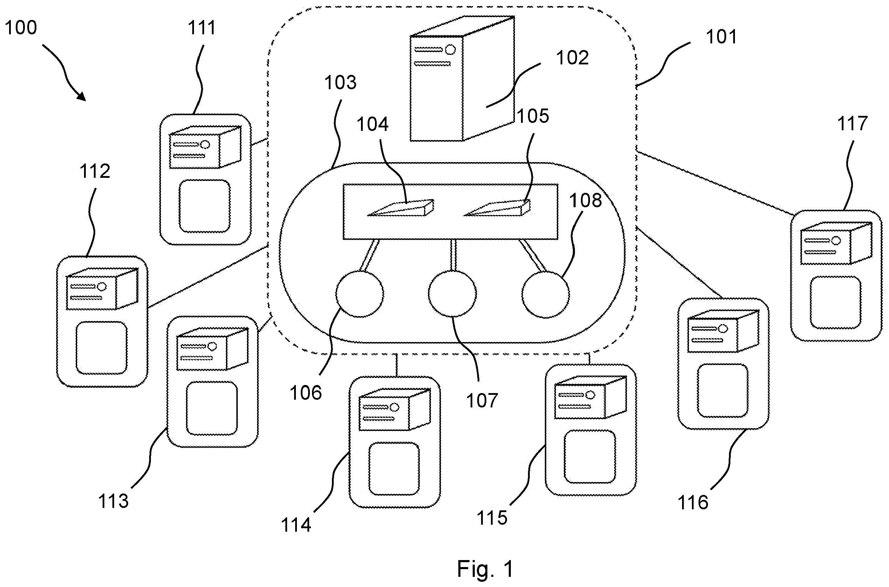

Figure 1 schematically illustrates a specific example 100 of a controller embodiment 102 and various network node embodiments 111-117 according to the present disclosure.

### DETAILED DESCRIPTION

Figure 1 schematically illustrates a specific example 100 of a controller embodiment 102 and various network node embodiments 111-117 according to the present disclosure. The figure shows an entanglement generation switch 101 (abbreviated as an EGS) with, in this specific example, H = 3 physical resources 106-108 connected to N = 7 network nodes 111-117. From a logical perspective, the switch 101 may comprise a control layer and a physical layer. The control layer may be hosted by a controller 102 (e.g. embodied on a processor of switch 101) which may run a control method together with the network nodes 111-117, as is represented in the figure by the processors shown schematically at the top in each network node 111-117. The physical layer may be defined by the switch fabric 103, the physical resources 106-108, and the connections between these components. Each network node 111-117 may be connected to the switch fabric 103 by a physical channel and to the control layer by a digital channel. The control layer may pass scheduling information to the switch fabric 103 and prices for rate allocation to the network nodes 111-117. Success or failure flags from the entanglement generation attempts of network nodes 111-117 that have been allocated a resource from among the physical resources 106-108 may be passed from the control layer to the network nodes 111-117. The switch fabric 103 may comprise switching means 104-105 configured for effecting the coupling between the network nodes 111-117 and the physical resources 106-108.

It will be understood that the specific number of physical resources, as well as the specific number of network nodes shown in Figure 1 is merely illustrative and that either or both may be different in other examples.

In the following description, various specific embodiments will be described in detail, in order to illustrate the present invention. It is to be understood that the following description should not be interpreted to limit the present invention, which is determined by the scope of the claims.

It is also to be understood that network comprising a plurality of network nodes configured to request a service of quantum entanglement generation may be termed a quantum network.

With respect to the rate of the switch, this may be interpreted as simply that: the rate at which the switch operates. Alternatively, it may be interpreted as meaning the fact that timeslots of the switch have a fixed duration and hence allocation, scheduling happens at a fixed rate, that is also interpretable as the rate of the switch. Requested and delivered entanglement rates are defined with respect to the fixed time slot duration as number of pairs delivered per time slot.

Various embodiments according to the present disclosure propose an architecture for the control of an important component of near-term quantum networks, which may be identified as an entanglement generation switch (EGS). In a sense, these embodiments provide a control protocol, functioning as a method which may instantiate a new class of methods describing control of such EGSs. The disclosed architecture may consider an EGS to comprise a control layer, a physical layer and an interface between the two layers.

Listing 1 below gives a formalized overview of an example architecture embodying a controller and various network nodes according to the present invention, as well as showing operational steps of several example method embodiments according to the present disclosure. In terms of the quantum network stack, the control layer of an EGS may be at the link layer (see reference [1] below) level of a quantum network. At the physical level, an EGS may be considered to be a central service station in a quantum network with physical connections, such as optical fibers, to N quantum nodes, which may be equipped with one or more communication qubits. The EGS may be equipped with H sets of physical resources, which may be allocated to subsets of nodes for the purposes of entanglement generation.

For the sake of convenience, the physical resources to be allocated may e.g. be considered to be heralding stations and the subsets of nodes may be considered to be node pairings. However, various disclosed embodiments may also be compatible with any other entanglement generation protocol which happens to rely on access to a physical resource. The control layer of the EGS may include both the switch processor and the set of network protocols followed by the switch and the network nodes. In an example, the function of the switch processor may be considered to be to coordinate the service that the EGS provides to the network; in other words, it may receive requests from network nodes, it may communicate service information to the nodes and it may calculate a resource allocation schedule for the switch. The set of network protocols may help to enable reliable service by the EGS and may include the disclosed rate control protocol, the disclosed scheduling method used to determine the allocation of resources, and the disclosed entanglement generation protocol employed by the switch. The rate control protocol may be a method runnable by both the network nodes and the switch processor which may incorporate real-time service information from the switch to adjust the service requests sent from the network nodes to the switch. In this manner, various embodiments according to the present disclosure may help to ensure that the switch resources may be distributed fairly amongst all the node requests and may help to optimize use of the available resources.

The switch processor is preferably work-conserving, which means that all physical resources are preferably assigned at each time slot whenever there is sufficient demand for entanglement from the nodes. Pairs of nodes may demand service from the switch by requesting specific rates of entanglement delivery, where the rate may be defined as the average number of entangled pairs delivered per time slot of the switch. In the following description, the notation I*ₖ* = {1,2,···, *k*} will be used to refer to an index set of k indices and the *n* - *th* time slot of the switch will be marked by *tₙ.* Denote the rate of entanglement requested by a pair of nodes (*i, j*) ∈ I*_{N}* × I*_{N} by λ*_{(*i,j*)}(*tₙ*) = *λ*_{(*j,i*)}(*tₙ*). To each distinct pair of nodes, a unique session id s may be associated, as in the following definition.

### Definition 1.1 (Session id). The set of session id's is,

$S : = \left\{s=\left(max\left(i, j\right), min\left(i, j\right)\right) ∀ \left(i, j\right)∈{I}_{N}\times {I}_{N}\left|{λ}_{\left(i, j\right)}\left({t}_{n}\right)>0\right.\right\} .$

For each unique session id s, the two involved network nodes may agree upon which one of the nodes is designated to communicate the entanglement requests to the switch. This node may be designated as a master node to communicate with the controller, while the other node may be designated as a slave node to refrain from communicating with the controller.

### Listing 1 - Control Architecture for Entanglement Generation Switches

*Physical Layer:* The entanglement generation switch may consist of the following components:
1. A set of H physical resources which can be allocated to facilitate entanglement generation;
2. Physical connections such as optical fibers between nodes and the central switch;
3. An optical switch, preferably with a crossbar topology, wherein the switch is configured to mediate the allocation of physical resources to pairs of end nodes;
4. The controller, which may also be termed a switch processor, which is a classical processor.

*Control Layer:* The control layer may be hosted by the switch processor and may coordinate the physical layer. In conjunction with classical processors at the nodes it may:
1. Calculate the duration of time a physical resource is allocated for by the switch schedule, *t*_{Sched};
2. Calculate a schedule for the allocation of the physical resources to nodes;
3. Execute the rate control method for updating the rates of entanglement generation requested by each session.

The rate control method:
- may require two-way communication between the designated communication node of each session and the switch;
- may require only one-way communication between the two nodes of a communication session, directed from the secondary node to the designated communication node;
- may coordinate the rates requested by communication sessions to balance the individual benefit each session s obtains from the entanglement delivery rate *λₛ*(*tₙ*) against the social utility of the set of network rates {*λₛ*(*tₙ*) ∀ *s*}.

*Interface between Control and Physical Layers:* The control method may expose the following physical properties of the EGS which may be accounted for in the control method:
1. The fidelity of entanglement requested by nodes;
2. The probability *p*_{gen} that a pair of nodes successfully generates entanglement when allocated a physical resource;
3. *t*_{Sched}, the length of a time slot of the resource allocation schedule;
4. *t*_{Comm}, the time delay associated with one way communication between the switch and the furthest linked node;

Note that *t*_{Sched} may be implicitly accounted for in the control method, mostly due to the definition of the rate, which may be defined as "number of pairs received over time interval *t*_{Sched}". It may also be accounted for in the sense that once begun, the method is assumed to run once completely each time interval *t*_{Sched}.

Note that *p*_{gen} may be accounted for in the method by parameter *λ_{Switch}* in equation 1.11 below (*λ_{Switch} = H* · *p_{gen}*) and by the parameter ${λ}_{Herald , s}^{max} \left(=x⋅{p}_{gen}\right)$ in equation 1.13, where *x* is the maximum number of times a session can be scheduled per time slot.

In a further developed embodiment of the control method, time delay may be taken into account by considering any one or more of the following parameters in addition to the parameters above:
3. *t*_{Sched}(*u*, *v, h*)*,* the length of a time slot allocating resource h to node pair (*u, v*)*,* instead of the above *t*_{Sched}.
4. *t*_{comm}(*u*), the time delay associated with one way communication between the switch and node *u*, instead of the above *t*_{Comm}.
5. *t*_{Switch}(*u*, v, *h*)*,* the time delay associated with aligning the optical switch to allocate physical resource h to node pair (*u, v*);
6. *t*_{Calibrate}(*u*, *v, h*)*,* potentially periodic downtime associated with re-calibration of switch components, which may depend on node pairs (*u, v*) or on physical resources h.

With regards to the parameter *t*_{Calibrate}, any calibration time may for the sake of expediency be thought of as absorbed into *t_{Sched}.*

Associate with each session id a random variable *aₛ*(*tₙ*) which follows a Bernoulli distribution with expectation value E[*aₛ*(*tₙ*)] = *λₛ*(*tₙ*) (i.e. the expected value is the entanglement request rate of session s). Each time slot, the designated communication node of each session s may create a number *aₛ*(*tₙ*) of individual requests for bi-partite entanglement generation by sampling a Bernoulli random number generator and may send these requests to the switch. In a preferred example, the requests may be sent with the distribution expectation value included in the message header so that the switch processor may track the values {*λₛ*(*tₙ*) ∀ *s*}. The switch processor may maintain a classical queue of the requests which may be separated into ISI virtual queues, each corresponding to a unique session id and considered to have an infinite buffer (of course, in a practical implementation the buffer size will be finite, but this has no relevant impact). The queues may form the basis for a maximum weight scheduling method, by which the switch may allocate use of the heralding stations to individual sessions at each time step.

*Definition 1.2 (Max Weight Scheduling).* Let *qₛ* represent the virtual queue length corresponding to the session s. Let *x** be the maximum number of heralding stations that can be allocated to a single session per time slot. The switch control selects a schedule *M*(*t*_{*n*+1}) for the following time step such that, $M \left({t}_{n + 1}\right) ∈ arg {max}_{{M}^{\left(h\right)}} {\sum }_{s} {q}_{s} \left({t}_{n}\right) {M}_{s}^{\left(h\right)} ,$ where *M*^{(*h*)} is the *h* - *th* schedule of the set of all feasible schedules of size 0 ≤ |*M*^{(*h*)}| ≤ H and *Mₛ*^{(*h*)} specifies whether session s is selected in the *h - th* possible schedule. Hence ${M}_{s}^{\left(h\right)} = \left\{\begin{matrix}x , if s is selected for x slots in the h - th schedule , x ∈ \left\{1,⋯,x*\right\} , \\ 0 , if s is not selected in the h - th schedule .\end{matrix}\right.$

The switch may allocate *x* heralding stations in the following time step to session s if *Mₛ*(*tₙ*+1) = x and *qₛ*(*tₙ*) ≥ x, i.e., there are at least x requests queued from session s at time *tₙ*.

For various embodiments according to the present disclosure, maximum weight scheduling may reduce to allocating a heralding station to each of the H sessions with the largest queues, with random tie-breaking and the possibility of allocating more than one heralding station to a single session s if *qₛ*(*tₙ*) exceeds the next largest session queue by more than 1 request and *x** the maximum number of resources that can be allocated to a single session exceeds 1. When a session s is scheduled to use a heralding station during time step *tₙ*, the nodes composing the session will attempt heralded entanglement generation during the allocated time. The probability that a scheduled session succeeds in producing heralded entanglement before the end of the time-slot can be modelled as a Bernoulli random variable with expectation value *p*_{gen}. Therefore, a session s that is allocated use of *Mₛ*(*tₙ*) heralding stations during time step *tₙ* produces a number of entangled pairs *gₛ*(*tₙ*) which is the realization of a binomial random variable, *gₛ*(*tₙ*) ~ Bin(*Mₛ*(*tₙ*), *p*_{gen}), with expectation value E[*gₛ*(*tₙ*)] = *p*_{gen} · *Mₛ*(*tₙ*). Requests are removed from a session queue only when heralded entanglement generation succeeds, hence *gₛ*(*tₙ*) requests depart from each virtual queue *qₛ*(*tₙ*) at each time step. The queue dynamics for each session are described by the following equation, ${q}_{s} \left(t+1\right) = {\left[{q}_{s}\left({t}_{n}\right)+{a}_{s}\left({t}_{n}\right)-{g}_{s}\left({t}_{n}\right)\right]}^{+} ∀ s ,$ where [*z*]⁺ = max(*z*, 0).

A distinction between an EGS and other possible configurations of switches in a quantum network is that an EGS has only classical and no quantum resources, meaning it has no qubits for communication or quantum memories. The role of the EGS may be considered to be to allocate the use of individual resources to subsets of end nodes. A crossbar topology is preferred for the switch, meaning that any resource can be allocated to an arbitrary subset of nodes. One way in which the crossbar topology of the switch could be physically implemented is by a low-loss optical switch. The optical switching necessary for dynamically allocating the switch resources may be considered to be an instantaneous process and the control method may be considered to not have to incorporate delay. However, various further developed embodiments may incorporate delays (possibly dependent on the particular nodes and resources to be allocated) due to the optical switching time (*t*_{Switch}(*u*, *v, h*)), finite communication time (*t*_{Comm}(*u*)), and down-time associated with the need for network calibration (*t*_{Calibrate}(*u*, *v, h*)) at regular intervals.

Two examples of physical resources that the switch may possess are heralding stations and photon sources. The physical entanglement generation protocol must be tailored to the physical resource. For the sake of conciseness, the following description will mainly assume that the resources are heralding stations and will only briefly describe the format of protocol in the case of photon sources. However, it will of course be understood that the principles underlying the present disclosure are of course not necessarily limited to heralding stations and/or photon sources.

A heralding station may comprise of two input channels connected to a 50/50 beam splitter, which is then connected by two output channels to a pair of photon detectors. Once a station is allocated to a pair of nodes, the nodes may use it to attempt a protocol called heralded bipartite entanglement generation. This is a probabilistic protocol which swaps communication qubit-photon entanglement of the two participating nodes by performing a Bell state measurement (BSM). The result is the probabilistic creation of an entangled pair between two nodes, which succeeds with success probability *p*_{gen}. A requirement for the success of heralded bi-partite entanglement generation is that the photons from the two nodes arrive simultaneously at the heralding station. Hence, precise coordination of timing in the network is required. The advantage of heralded entanglement generation is that when successful, it outputs a heralding signal or flag which indicates that the protocol was a success; this classical information can be sent to notify nodes when they have created shared entanglement. In the case where the physical resources are instead photon sources the entanglement generation protocol requires the switch to send entangled photons to network nodes, which must be equipped with detector setups to detect received photons. In the present description, the EGS may preferably be equipped to generate bi-partite entanglement. It is however possible to extend the notion of an EGS equipped with only classical physical resources such as linear optics instruments in order to be compatible with the generation of multi-partite entanglement. One possibility is to consider an appropriate multi-partite version of the heralding protocol, such as in reference [2] (see below). EGSs may for example be used in metropolitan scale networks, meaning that the maximum distance of any physical link in the network does not exceed a scale of tens of kilometers. At this distance scale, all links in the network may be considered to be direct links and the use of components such as repeater stations does not have to be considered. However, it will be understood that in practical implementations, such components may prove to be necessary in certain situations.

The basic interaction between nodes and an EGS is that individual pairs of nodes submit requests to the switch for the delivery of a specified average rate of entanglement generation. Specifically, consider the switch to be a slotted time system with time steps indexed as {*tₙ*} of duration *t*_{Sched}, and the rate of entanglement delivery to be defined with respect to the average number of pairs delivered per the unit of time *t*_{Sched}. The duration of time slots is preferably fixed based on physical characteristics of the network nodes and the fidelity of entanglement requested by the network nodes. The lengths of links connecting the nodes to the switch set communication delays due to the finite speed of information transfer and should also be accounted for in the time slot duration; the time slot duration should be calculated to satisfy *t*_{Sched} > 2 · *t*_{Comm} to account for round trip communication over the longest link in the EGS network. In this analysis it may be assumed that the network nodes are homogeneous, in the sense that all communication qubits consist of the same type of physical qubit. Nodes may however have differing numbers of quantum resources such as memories or communication qubits. Furthermore, it may be assumed that all requests for entanglement are for a fixed fidelity of bi-partite entangled pair. For any specific physical platform (such as Nitrogen Vacancy centers, trapped ions, all photonic processors, see references [3, 4], [5, 6], [7, 8] below) for communication qubits, fixing the request fidelity level can be used to determine a suitable length for the switch timeslots. When the pair of nodes corresponding to communication session s requests an entanglement delivery rate of *λₛ,* they are requesting that an average of *λₛ* entangled pairs be delivered per time slot. The EGS may use a scheduling method to allocate the use of heralding stations to pairs of end nodes. Associated with the switch is a set of maximum service rates, known as the capacity region of the switch (i.e. the service capacity of the switch). When the set of rates requested by all pairs of end nodes lies within the capacity region of the switch, there exists a scheduling method under which the time average of the entanglement delivery rate realized for each pair of nodes matches the request rate.

The rate control protocol may be considered to be a distributed method for solving a Network Utility Maximization (NUM) problem on an EGS. NUM is a framework for deriving the optimal service rates in a network with respect to a specific target performance metric and a notion of fairness. Here, the NUM problem is at the communication session level, as opposed to at the user level. An example performance metric and associated notion of fairness are throughput and proportional fairness. Throughput in the context of an EGS is the total rate of entanglement delivery; it is equal to the sum of the rates delivered to each communication session. The term proportional fairness refers to a structure of the optimization problem such that if one of the session rates is increased by a certain amount, then the sum of the fractions by which the different users' rates change is non-positive (see reference [9] below). In this framework, a quantity called the utility is associated with each communication session, s. The utility is a strictly concave function *fₛ*(*λₛ*) which quantifies the benefit to communication session s of receiving rate allocation *λₛ*. Strict concavity of the utility functions enforces that the utility of each source is non-decreasing, but the amount of utility to be gained by increasing a large rate is less than the utility to be gained by increasing a smaller rate. The utility of each communication session is balanced against the cost to the network of allocating rate *λₛ* to session s. The optimization problem is to maximize the sum utility of the communication sessions, subject to the constraints of the network costs. The choice of utility functions may preferably encode both the target metric and the notion of fairness. For example, by using a (weighted) log utility function, *fₛ*(*λₛ*) = *wₛ* log(*λₛ*), throughput as a target metric and proportional fairness are encoded into the optimization problem. A formal presentation of the problem with abstract utility functions is as follows.

Define *S*(*u*) := {s : *u* ∈ *s*} to be the set of sessions in which node *u* participates. The complimentary set *U*(*s*) := {*u* : *u* ∈ *s*} defines the pair of nodes that constitute session s. Define the feasible rate region of session s as follows, ${Λ}_{s} : = \left\{{λ}_{s}:{λ}_{s}^{min}\leq {λ}_{s}\leq {λ}_{Herald , s}^{max}\right\} ∀ s ,$ where *λ*^{min}*ₛ* ≥ 0 and *λ*^{max}_{Herald,*s*} = *x* · *p_{gen},* where *x* ∈ [1, H] is the maximum number of times a single session can be scheduled per time slot. The feasible region for all rate vectors A is then given by, $Λ = {∪}_{s} {Λ}_{s}$

We derive a method which solves the following problem: ${max}_{λ ∈ Λ} F \left(λ\right) : = {\sum }_{s} {f}_{s} \left({λ}_{s}\right) ,$ subject to, ${\sum }_{s} {λ}_{s} \leq {λ}_{Switch}$ ${\sum }_{s ∈ S \left(u\right)} {λ}_{s} \leq \overline{{λ}_{u}} ∀ u .$

The objective functions of interest, *fₛ*, in equation 1.6 are strictly concave. To ensure feasibility and satisfy the Slater constraint qualification (see reference [10] below), it is necessary that the rate vector with components equal to the minimal rates of each session is an interior point of the constraint set, ${\sum }_{s} {λ}_{s}^{min} < {λ}_{Switch}$ ${\sum }_{s ∈ S \left(u\right)} {λ}_{s}^{min} < \overline{{λ}_{u}} ∀ u .$

The full set of constraints considered is highly adaptable. The role of two of the constraints is to enforce that the rate allocation remains within the capacity region of the switch. The role of the other two constraints is to incorporate physically motivated restrictions on the capabilities of the end nodes. Taken together, constraint 1.7 and the upper bound on each session rate in equation 1.4 encode the capacity region of the switch. The lower bound on each session rate in equation 1.4 encodes that each communication session specifies a minimum usable rate, which the session requires in order for the received entanglement to be useful for the targeted application. The final constraint, equation 1.8, is an upper bound on the maximum rate that can be requested by any one node, across all of its communication sessions. This constraint describes a situation in which the network nodes have restricted quantum resources. In such a situation, each node can only support some maximum value *λ̅ᵤ̅* of entanglement generation across all of its communication sessions. Examples of ways in which the quantum resources at a network node may be limited include a finite number of communication qubits, a finite number of quantum memories, or a transfer time from communication qubit to quantum memory that is slow compared to the switch timescale.

An example of the rate control protocol for an EGS is presented below in Listing 2. The protocol controls the rate requested by each communication session and is made up of two sub methods: a method run by the central switch and a method run by each node in the network.

### Listing 2 - Rate Control Protocol

*Central Switch's Method:* At times *tₙ = t*₁*, t*₂*,* ···, the central switch:
1. receives rates *λₛ*(*tₙ*) from all communication sessions *s* ∈ *S*;
2. computes a new centralized price, ${p}_{c} \left({t}_{n + 1}\right) = {\left[\frac{1}{{λ}_{Switch}}{\sum }_{s} {q}_{s} \left({t}_{n}\right) + {θ}_{c} \left({\sum }_{s} {λ}_{s} \left({t}_{n}\right) - {λ}_{Switch}\right)\right]}^{+} ;$
3. broadcasts the new price *p_{c}*(*t*_{*n*+1}) to all communication sessions *s* ∈ *S*.

*Node u's Method:* At times *tₙ = t*₁*, t*₂*,* ···, node *u*:
1. receives from the switch the centralized price *p_{c}*(*tₙ*);
2. marks the subset of communication sessions COMM(*u*) ⊆ *S*(*u*) which involve node *u* for which it is the designated communication node of the session;
3. receives from every partner node *u*' the price *p_{u'}*(*tₙ*) for each session s = (*u, u*') ∈ COMM(*u*)
4. computes a new node price, ${p}_{u} \left({t}_{n + 1}\right) = {\left[\frac{{1}_{¯}}{{λ}_{u}}{\sum }_{s ∈ S \left(u\right)} {q}_{s} \left({t}_{n}\right) + {θ}_{u} \left({\sum }_{s ∈ S \left(u\right)} {λ}_{s} \left({t}_{n}\right) - \overline{{λ}_{u}}\right)\right]}^{+} , ∀ u ;$
5. communicates the new price *pᵤ*(*t*_{*n*+1}) to the partner node from every session *s* ∈ *S*(*u*) \COMM(u) in which *u* is not the designated communication node;
6. computes the new session rate for every session *s* ∈ COMM(*u*), ${λ}_{s} \left({t}_{n + 1}\right) = {\left[{\left(\frac{d {f}_{s}}{d {λ}_{s}}\right)}^{- 1}\left(p\left({t}_{n}\right)\right)\right]}_{{λ}_{s}^{min}}^{{λ}_{Herald , s}^{max}} ,$
   where [*z*]*^{M}ₘ =* max ( min(z, *M*), *m*) and *p*(*tᵢ*) = (*p_{c}*(*tᵢ*), *pᵤ*(*tᵢ*) ∀ *u*) is the vector of prices pertaining to time-slot *tᵢ*;
7. communicates the new session rate *λₛ*(*t*_{*n*+1}) to the central switch, for every session *s* ∈ COMM(*u*).

### REFERENCES

[1] Axel Dahlberg et al. "A link layer protocol for quantum networks". In: Proceedings of the ACM Special Interest Group on Data Communication. ACM, Aug. 2019. DOI: 10.1145/3341302.3342070. URL: https://DOI.org/10.1145%2F3341302.3342070.
[2] Valentina Caprara Vivoli, Jérémy Ribeiro, and Stephanie Wehner. "High-fidelity Greenberger-Horne-Zeilinger state generation within nearby nodes". In: Physical Review A 100.3 (Sept. 2019). DOI: 10 .1103/physreva.100.032310. URL: https://DOI.org/10.1103%2Fphysreva.100.032310.
[3] M. Pompili et al. "Realization of a multinode quantum network of remote solid-state qubits". In: Science 372.6539 (Apr. 2021), pp. 259-264. DOI: 10.1126/science.abg1919. URL: https://DOI.org/10.1126%2Fscience.abg1919.
[4] Anaïs Dréau et al. "Quantum Frequency Conversion of Single Photons from a Nitrogen-Vacancy Center in Diamond to Telecommunication Wavelengths". In: Phys. Rev. Applied 9 (6 June 2018), p. 064031. DOI: 10.1103/PhysRevApplied.9.064031. URL: https://link.aps.org/DOI/10.1103/PhysRevApplied.9.064031.
[5] V. Krutyanskiy et al. "Light-matter entanglement over 50 km of optical fibre". In: npj Quantum Information 5.1 (Aug. 2019). DOI: 10.1038/s41534-019-0186-3. URL: https://DOI.org/10.1038%2Fs41534-019-0186-3.
[6] I. Pogorelov et al. "Compact Ion-Trap Quantum Computing Demonstrator". In: PRX Quantum 2.2 (June 2021). DOI: 10.1103/prxquantum.2.020343. URL: https://DOI.org/10.1103%2Fprxquantum.2.020343.
[7] J. M. Arrazola et al. "Quantum circuits with many photons on a programmable nanophotonic chip". In: Nature 591.7848 (Mar. 2021), pp. 54-60. DOI: 10.1038/s41586-021-03202-1. URL: https://DOI.org/10.1038%2Fs41586-021-03202-1.
[8] Lars S. Madsen et al. In: Nature 606 (7912 June 2022). DOI: 10.1038/s41586-022-04725-x.
[9] R. Srikant and Lei Ying. Communication Networks: An Optimization, Control, and Stochastic Networks Perspective. Cambridge University Press, 2014. ISBN: 978-1-107-03605-5.
[10] Dimitri P. Bertsekas. Nonlinear Programming, Second Edition. Athena Scientific, 1999. ISBN: 1-886529-00-0.

## Claims

1. A computer-implemented method for controlling service demand in a network (100); the network comprising a plurality of network nodes (111-117) configured to request a service of quantum entanglement generation, a plurality of resource nodes (106-108) configured to deliver a service of quantum entanglement generation, a switch (101) coupling the plurality of network nodes with the plurality of resource nodes, and a controller (102) configured for controlling the switch; the method comprising, at the controller:
- obtaining from at least a subset of the plurality of network nodes a plurality of service requests for quantum entanglement generation;
- determining a central price '*p_{c}*(*t*_{*n*+1}*)*' for the service, wherein the determining of the central price for the service comprises a computation based on the obtained plurality of service requests, based on a service capacity '*λ*_{*S*witch}' of the plurality of resource nodes and based on a plurality of previous session rates *'λₛ*(*tₙ)'* and taking into account a maximum rate of the switch; and
- communicating the central price to at least the subset of the plurality of network nodes.

2. The method of claim 1, wherein the method further comprises:
- determining an allocation schedule for allocating the plurality of resource nodes to the plurality of network nodes, based on a plurality of session rates obtained from the plurality of network nodes.

3. The method of any preceding claim, wherein an initial iteration of the central price is set at zero and an initial iteration of the previous session rates is set at a maximum possible rate for each corresponding session, ${λ}_{Herald , s}^{max}$.

4. The method of any preceding claim, wherein the service capacity of the plurality of resource nodes is based on the number of resource nodes and is based on a plurality of respective probabilities of the plurality of resource nodes to generate quantum entanglement.

5. The method of any preceding claim, wherein the plurality of service requests comprises a plurality of requests for desired delivery of a specified average rate of quantum entanglement generation from the plurality of resource nodes.

6. A computer-implemented method for controlling service demand in a network (100); the network comprising a plurality of network nodes (111-117) configured to request a service of quantum entanglement generation, a plurality of resource nodes (106-108) configured to deliver a service of quantum entanglement generation, a switch (101) coupling the plurality of network nodes with the plurality of resource nodes, and a controller (102) configured for controlling the switch; wherein a subset or a totality of the plurality of network nodes is associated with a plurality of sessions 'S', wherein each session '*s*' of the plurality of sessions is associated with a network node designated as a master network node to communicate with the controller and is further associated with another network node designated as a slave network node to refrain from communication with the controller; the method comprising, at a master network node of the plurality of network nodes, the master network node being associated with at least one session of the plurality of sessions:
- obtaining from the controller a central price *'p_{c}*(*tₙ)*'; and
- for each session of the at least one session, receiving a previous node price *'p_{u'}*(*tₙ)'* from the respective slave network node associated with said session;
- determining a new node price *'pᵤ*(*tₙ₊₁)' ,* wherein the determining of the new node price comprises a computation based on a backlog of at least one previous transmitted service request for quantum entanglement generation from each session of the at least one session, and based on at least one most recent rate request from each session of the at least one session and taking into account a maximally supported rate '*λᵤ*' for the network node;
- for each session of the at least one session, determining a session rate *'λₛ(tₙ₊₁)',* wherein the determining of the session rate comprises a computation based on the central price and at least one previous node price *'p*(*tₙ)'* and taking into account a minimum session rate value *'λₛ^{min}',* a maximum session rate value *'λ_{Herald,s}^{max}',* and a utility function '*(dfₛ*/*dλₛ)⁻¹*' encoding a target metric and a fairness metric; and
- for each session of the at least one session, sending the session rate to the controller.

7. The method of claim 6, wherein an initial iteration of the session rate is set at a maximum session rate for each corresponding session, ${λ}_{Herald , s}^{max}$.

8. A computer-implemented method for controlling service demand in a network (100); the network comprising a plurality of network nodes (111-117) configured to request a service of quantum entanglement generation, a plurality of resource nodes (106-108) configured to deliver a service of quantum entanglement generation, a switch (101) coupling the plurality of network nodes with the plurality of resource nodes, and a controller (102) configured for controlling the switch; wherein a subset or a totality of the plurality of network nodes is associated with a plurality of sessions 'S', wherein each session '*s*' of the plurality of sessions is associated with a network node designated as a master network node to communicate with the controller and is further associated with another network node designated as a slave network node to refrain from communication with the controller; the method comprising, at a slave network node of the plurality of network nodes, the slave network node being associated with at least one session of the plurality of sessions:
- obtaining from the controller a central price *'p_{c}*(*tₙ)*';
- determining a new node price *'pᵤ(tₙ₊₁)',* wherein the determining of the new node price comprises a computation based on a backlog of at least one previous transmitted service request for quantum entanglement generation from each session of the at least one session, and based on at least one most recent rate request from each session of the at least one session and taking into account a maximally supported rate '*λᵤ*' for the network node; and
- for each session of the at least one session, sending the new node price to the respective master network node associated with said session.

9. The method of any preceding claim, wherein the controller is externally connected with the plurality of quantum entanglement generation resource nodes and internally comprises only non-quantum resources.

10. The method of any preceding claim,
wherein the plurality of resource nodes comprises a plurality of heralding stations; or
wherein the plurality of resource nodes comprises a plurality of photon sources, and wherein the switch is configured for transmitting photons, and wherein each network node of the plurality of network nodes comprises at least a photon detector.

11. A computer program comprising instructions configured for, when executed by at least one processor, performing the method of any preceding claim.

12. A computer-readable storage medium storing the computer program of claim 11.

13. A controller (102) for controlling service demand in a network (100); the network comprising a plurality of network nodes (111-117) configured to request a service of quantum entanglement generation, a plurality of resource nodes (106-108) configured to deliver a service of quantum entanglement generation, and a switch (101) coupling the plurality of network nodes with the plurality of resource nodes; the controller comprising:
- a receiver configured for obtaining from at least a subset of the plurality of network nodes a plurality of service requests for quantum entanglement generation;
- a calculation unit configured for determining a central price *'p_{c}*(*t*_{*n*+1}*)'* for the service, wherein the determining of the central price for the service comprises a computation based on the obtained plurality of service requests, based on a service capacity '*λ*_{*S*witch}' of the plurality of resource nodes and based on a plurality of previous session rates *'λₛ*(*tₙ)'* and taking into account a maximum rate of the switch; and
- a transmitter configured for communicating the central price to at least the subset of the plurality of network nodes.

14. A master network node for controlling service demand in a network (100); the network comprising a plurality of network nodes (111-117) configured to request a service of quantum entanglement generation, a plurality of resource nodes (106-108) configured to deliver a service of quantum entanglement generation, a switch (101) coupling the plurality of network nodes with the plurality of resource nodes, and a controller (102) configured for controlling the switch; wherein a subset or a totality of the plurality of network nodes is associated with a plurality of sessions 'S', wherein each session '*s*' of the plurality of sessions is associated with the master network node to communicate with the controller and is further associated with another network node designated as a slave network node to refrain from communication with the controller; the master network node being associated with at least one session of the plurality of sessions; the master network node comprising:
- a receiver configured for:
- obtaining from the controller a central price *'p_{c}*(*tₙ)*'; and
- for each session of the at least one session, receiving a previous node price *'p_{u'}*(*tₙ)'* from the respective slave network node associated with said session;
- a calculation unit configured for
- determining a new node price *'pᵤ*(*tₙ₊₁)',* wherein the determining of the new node price comprises a computation based on a backlog of at least one previous transmitted service request for quantum entanglement generation from each session of the at least one session, and based on at least one most recent rate request from each session of the at least one session and taking into account a maximally supported rate '*λᵤ*' for the master network node; and
- for each session of the at least one session, determining a session rate *'λₛ*(*tₙ₊₁)',* wherein the determining of the session rate comprises a computation based on the central price and at least one previous node price *'p*(*tₙ)'* and taking into account a minimum session rate value '*λₛ^{min}*', a maximum session rate value *'λ_{Herald,s}^{max}',* and a utility function *'(dfₛ*/*dλₛ)⁻¹'* encoding a target metric and a fairness metric; and
- a transmitter configured for, for each session of the at least one session, sending the session rate to the controller.

15. A slave network node for controlling service demand in a network (100); the network comprising a plurality of network nodes (111-117) configured to request a service of quantum entanglement generation, a plurality of resource nodes (106-108) configured to deliver a service of quantum entanglement generation, a switch (101) coupling the plurality of network nodes with the plurality of resource nodes, and a controller (102) configured for controlling the switch; wherein a subset or a totality of the plurality of network nodes is associated with a plurality of sessions 'S', wherein each session '*s*' of the plurality of sessions is associated with a network node designated as a master network node to communicate with the controller and is further associated with the slave network node to refrain from communication with the controller; the slave network node being associated with at least one session of the plurality of sessions; the slave network node comprising:
- a receiver configured for obtaining from the controller a central price *'p_{c}*(*tₙ)*';
- a calculation unit configured for determining a new node price *'pᵤ*(*tₙ₊₁)',* wherein the determining of the new node price comprises a computation based on a backlog of at least one previous transmitted service request for quantum entanglement generation from each session of the at least one session, and based on at least one most recent rate request from each session of the at least one session and taking into account a maximally supported rate '*λᵤ*' for the slave network node; and
- a transmitter configured for, for each session of the at least one session, sending the new node price to the respective master network node associated with said session.

## Patentansprüche

1. Computerimplementiertes Verfahren zur Steuerung der Dienstanfrage in einem Netzwerk (100); wobei das Netzwerk eine Vielzahl von Netzwerkknoten (111-117), die dazu konfiguriert ist, einen Dienst der Quantenverschränkungserzeugung anzufordern, eine Vielzahl von Ressourcenknoten (106-108), die dazu konfiguriert ist, einen Dienst der Quantenverschränkungserzeugung zu liefern, einen Schalter (101), der die Vielzahl von Netzwerkknoten mit der Vielzahl von Ressourcenknoten koppelt, und eine Steuerung (102), die zum Steuern des Schalters konfiguriert ist, umfasst; wobei das Verfahren an der Steuerung Folgendes umfasst:
- Erhalten, von zumindest einem Teilsatz der Vielzahl von Netzwerkknoten, einer Vielzahl von Dienstanforderungen für Quantenverschränkungserzeugung;
- Bestimmen eines zentralen Preises *'p_{c}*(*t*_{*n+*1})*'* für den Dienst, wobei das Bestimmen des zentralen Preises für den Dienst eine Berechnung basierend auf der erhaltenen Vielzahl von Dienstanforderungen umfasst, basierend auf einer Dienstkapazität '*λ*_{Schalter}' der Vielzahl von Ressourcenknoten und basierend auf einer Vielzahl von vorherigen Sitzungsraten *'λₛ*(*tₙ*)*'* und unter Berücksichtigung einer maximalen Rate des Schalters; und
- Kommunizieren des zentralen Preises an zumindest einen Teilsatz der Vielzahl von Netzwerkknoten.

2. Verfahren nach Anspruch 1, wobei das Verfahren ferner Folgendes umfasst:
- Bestimmen eines Zuweisungsplans zum Zuweisen der Vielzahl von Ressourcenknoten zu der Vielzahl von Netzwerkknoten, basierend auf einer Vielzahl von Sitzungsraten, die von der Vielzahl von Netzwerkknoten erhalten wird.

3. Verfahren nach einem vorhergehenden Anspruch, wobei eine anfängliche Iteration des zentralen Preises auf Null gesetzt ist und eine anfängliche Iteration der vorherigen
Sitzungsraten auf eine maximal mögliche Rate für jede entsprec 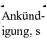 igung, s Sitzung, ${λ}_{Herald , s}^{max}$, gesetzt ist.

4. Verfahren nach einem vorhergehenden Anspruch, wobei die Dienstkapazität der Vielzahl von Ressourcenknoten auf der Anzahl an Ressourcenknoten basiert und auf einer Vielzahl von jeweiligen Wahrscheinlichkeiten der Vielzahl von Ressourcenknoten basiert, Quantenverschränkung zu erzeugen.

5. Verfahren nach einem vorhergehenden Anspruch, wobei die Vielzahl von Dienstanforderungen eine Vielzahl von Anforderungen zur gewünschten Lieferung einer spezifizierten Durchschnittsrate der Quantenverschränkungserzeugung der Vielzahl von Ressourcenknoten umfasst.

6. Computerimplementiertes Verfahren zur Steuerung der Dienstanfrage in einem Netzwerk (100); wobei das Netzwerk eine Vielzahl von Netzwerkknoten (111-117), die dazu konfiguriert ist, einen Dienst der Quantenverschränkungserzeugung anzufordern, eine Vielzahl von Ressourcenknoten (106-108), die dazu konfiguriert ist, einen Dienst der Quantenverschränkungserzeugung zu liefern, einen Schalter (101), der die Vielzahl von Netzwerkknoten mit der Vielzahl von Ressourcenknoten koppelt, und eine Steuerung (102), die zum Steuern des Schalters konfiguriert ist, umfasst; wobei ein Teilsatz oder eine Gesamtheit der Vielzahl von Netzwerkknoten mit einer Vielzahl von Sitzungen '*S*' assoziiert ist, wobei jede Sitzung '*s*' der Vielzahl von Sitzungen mit einem Netzwerkknoten assoziiert ist, der als Master-Netzwerkknoten benannt ist, um mit der Steuerung zu kommunizieren, und ferner mit einem anderen Netzwerkknoten assoziiert ist, der als Slave-Netzwerkknoten benannt ist, um von Kommunikation mit der Steuerung abzusehen; wobei das Verfahren an einem Master-Netzwerkknoten der Vielzahl von Netzwerkknoten, wobei der Master-Netzwerkknoten mit zumindest einer Sitzung der Vielzahl von Sitzungen assoziiert ist, Folgendes umfasst:
- Erhalten, von der Steuerung, eines zentralen Preises *'p_{c}*(*tₙ*)*';* und
- für jede Sitzung der zumindest einen Sitzung, Empfangen eines vorherigen Knotenpreises *'p_{u'}*(*tₙ*)*'* von dem jeweiligen Slave-Netzwerkknoten assoziiert mit der Sitzung;
- Bestimmen eines neuen Knotenpreises *'pᵤ*(*tₙ₊₁*)*',* wobei das Bestimmen des neuen Knotenpreises eine Berechnung basierend auf einem Rückstand von zumindest einer vorherigen übertragenen Dienstanforderung zur Quantenverschränkungserzeugung aus jeder Sitzung der zumindest einen Sitzung und basierend auf zumindest einer jüngsten Ratenanforderung aus jeder Sitzung der zumindest einen Sitzung und unter Berücksichtigung einer maximal unterstützten Rate '*λᵤ*' für den Netzwerkknoten umfasst;
- für jede Sitzung der zumindest einen Sitzung, Bestimmen einer Sitzungsrate *'λₛ*(*tₙ₊₁*)', wobei das Bestimmen der Sitzungsrate eine Berechnung basierend auf dem zentralen Preis und zumindest einem vorherigen Knotenpreis *'p*(*tₙ*)', und unter Berücksichtigung eines minimalen Sitzungsratenwertes 'λₛ^{min}', eines maximalen Sitzungsratenwertes *'λ_{Ankandigung,s}^{max},* und einer Versorgungsfunktion *'*(*dfₛ*/*dλₛ*)⁻*¹,* die eine Ziel-Metrik und eine Fairness-Metrik kodiert, umfasst; und
- für jede Sitzung der zumindest einen Sitzung, Senden der Sitzungsrate an die Steuerung.

7. Verfahren nach Anspruch 6, wobei eine anfängliche Iteration der Sitzungsrate auf eine maximale Sitzungsrate für jede entsprechende Sitzu 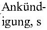 $\begin{matrix}max \\ rald , s\end{matrix}$, gesetzt ist.

8. Computerimplementiertes Verfahren zur Steuerung der Dienstanfrage in einem Netzwerk (100); wobei das Netzwerk eine Vielzahl von Netzwerkknoten (111-117), die dazu konfiguriert ist, einen Dienst der Quantenverschränkungserzeugung anzufordern, eine Vielzahl von Ressourcenknoten (106-108), die dazu konfiguriert ist, einen Dienst der Quantenverschränkungserzeugung zu liefern, einen Schalter (101), der die Vielzahl von Netzwerkknoten mit der Vielzahl von Ressourcenknoten verbindet, und eine Steuerung (102), die zum Steuern des Schalters konfiguriert ist, umfasst; wobei ein Teilsatz oder eine Gesamtheit der Vielzahl von Netzwerkknoten mit einer Vielzahl von Sitzungen '*S*' assoziiert ist, wobei jede Sitzung 's' der Vielzahl von Sitzungen mit einem Netzwerkknoten assoziiert ist, der als Master-Netzwerkknoten benannt ist, um mit der Steuerung zu kommunizieren, und ferner mit einem anderen Netzwerkknoten assoziiert ist, der als Slave-Netzwerkknoten benannt ist, um von Kommunikation mit der Steuerung abzusehen; wobei das Verfahren an einem Slave-Netzwerkknoten der Vielzahl von Netzwerkknoten, wobei der Slave-Netzwerkknoten mit zumindest einer Sitzung der Vielzahl von Sitzungen assoziiert ist, Folgendes umfasst:
- Erhalten, von der Steuerung, eines zentralen Preises *p_{c}(tₙ)';*
- Bestimmen eines neuen Knotenpreises *'pᵤ*(*tₙ₊₁*)*',* wobei das Bestimmen des neuen Knotenpreises eine Berechnung basierend auf einem Rückstand von zumindest einer vorherigen übertragenen Dienstanforderung zur Quantenverschränkungserzeugung aus jeder Sitzung der zumindest einen Sitzung und basierend auf zumindest einer jüngsten Ratenanforderung aus jeder Sitzung der zumindest einen Sitzung und unter Berücksichtigung einer maximal unterstützten Rate *'*λ*ᵤ'* für den Netzwerkknoten umfasst; und
- für jede Sitzung der zumindest einen Sitzung, Senden des neuen Knotenpreises an den jeweiligen Master-Netzwerkknoten assoziiert mit der Sitzung.

9. Verfahren nach einem vorhergehenden Anspruch, wobei die Steuerung extern mit der Vielzahl von Quantenverschränkungserzeugungsressourcenknoten verbunden ist und intern nur Nicht-Quanten-Ressourcen umfasst.

10. Verfahren nach einem vorhergehenden Anspruch,
wobei die Vielzahl von Ressourcenknoten eine Vielzahl von Ankündigungsstationen umfasst; oder
wobei die Vielzahl von Ressourcenknoten eine Vielzahl von Photonenquellen umfasst und wobei der Schalter zum Übertragen von Photonen konfiguriert ist und wobei jeder Netzwerkknoten der Vielzahl von Netzwerkknoten zumindest einen Photonendetektor umfasst.

11. Computerprogramm, umfassend Anweisungen, die, wenn durch zumindest einen Prozessor ausgeführt, zum Durchführen des Verfahrens nach einem vorhergehenden Anspruch konfiguriert sind.

12. Computerlesbares Speichermedium, welches das Computerprogramm nach Anspruch 11 speichert.

13. Steuerung (102) zur Steuerung der Dienstanfrage in einem Netzwerk (100); wobei das Netzwerk eine Vielzahl von Netzwerkknoten (111-117), die dazu konfiguriert ist, einen Dienst der Quantenverschränkungserzeugung anzufordern, eine Vielzahl von Ressourcenknoten (106-108), die dazu konfiguriert ist, einen Dienst der Quantenverschränkungserzeugung zu liefern, und einen Schalter (101), der die Vielzahl von Netzwerkknoten mit der Vielzahl von Ressourcenknoten koppelt; umfasst, wobei die Steuerung Folgendes umfasst:
- einen Empfänger, der zum Erhalten, von zumindest einem Teilsatz der Vielzahl von Netzwerkknoten, einer Vielzahl von Dienstanforderungen für Quantenverschränkungserzeugung konfiguriert ist;
- eine Kalkulationseinheit, die zum Bestimmen eines zentralen Preises *'p_{c}*(*t*_{*n+*1})*'* für den Dienst konfiguriert ist, wobei das Bestimmen des zentralen Preises für den Dienst eine Berechnung basierend auf der erhaltenen Vielzahl von Dienstanforderungen umfasst, basierend auf einer Dienstkapazität 'λ_{Schalter}' der Vielzahl von Ressourcenknoten und basierend auf einer Vielzahl von vorherigen Sitzungsraten *'λₛ*(*tₙ*)*'* und unter Berücksichtigung einer maximalen Rate des Schalters; und
- einen Sender, der zum Kommunizieren des zentralen Preises an zumindest den Teilsatz der Vielzahl von Netzwerkknoten konfiguriert ist.

14. Master-Netzwerkknoten zur Steuerung der Dienstanfrage in einem Netzwerk (100); wobei das Netzwerk eine Vielzahl von Netzwerkknoten (111-117), die dazu konfiguriert ist, einen Dienst der Quantenverschränkungserzeugung anzufordern, eine Vielzahl von Ressourcenknoten (106-108), die dazu konfiguriert ist, einen Dienst der Quantenverschränkungserzeugung zu liefern, einen Schalter (101), der die Vielzahl von Netzwerkknoten mit der Vielzahl von Ressourcenknoten koppelt, und eine Steuerung (102), die zum Steuern des Schalters konfiguriert ist, umfasst; wobei ein Teilsatz oder eine Gesamtheit der Vielzahl von Netzwerkknoten mit einer Vielzahl von Sitzungen '*S*' assoziiert ist, wobei jede Sitzung '*s*' der Vielzahl von Sitzungen mit dem Master-Netzwerkknoten assoziiert ist, um mit der Steuerung zu kommunizieren, und ferner mit einem anderen Netzwerkknoten assoziiert ist, der als Slave-Netzwerkknoten benannt ist, um von Kommunikation mit der Steuerung abzusehen; wobei der Master-Netzwerkknoten mit zumindest einer Sitzung der Vielzahl von Sitzungen assoziiert ist; wobei der Master-Netzwerkknoten Folgendes umfasst:
- einen Empfänger, der zu Folgendem konfiguriert ist:
- Erhalten, von der Steuerung, eines zentralen Preises *'p_{c}*(*tₙ*)*';* und
- für jede Sitzung der zumindest einen Sitzung, Empfangen eines vorherigen Knotenpreises *'pᵤ*(*tₙ*)*'* von dem jeweiligen Slave-Netzwerkknoten assoziiert mit der Sitzung;
- eine Kalkulationseinheit, die zu Folgendem konfiguriert ist
- Bestimmen eines neuen Knotenpreises *'pᵤ*(*tₙ₊₁*)*',* wobei das Bestimmen des neuen Knotenpreises eine Berechnung basierend auf einem Rückstand von zumindest einer vorherigen übertragenen Dienstanforderung zur Quantenverschränkungserzeugung aus jeder Sitzung der zumindest einen Sitzung und basierend auf zumindest einer jüngsten Ratenanforderung aus jeder Sitzung der zumindest einen Sitzung und unter Berücksichtigung einer maximal unterstützten Rate 'λ*ᵤ'* für den Master-Netzwerkknoten umfasst; und
- für jede Sitzung der zumindest einen Sitzung, Bestimmen einer Sitzungsrate *'λₛ*(*tₙ₊₁*)*',* wobei das Bestimmen der Sitzungsrate eine Berechnung basierend auf dem zentralen Preis und zumindest einem vorherigen Knotenpreis *'p*(*tₙ*)*'* und unter Berücksichtigung eines minimalen Sitzungsratenwertes *'λₛ^{min}',* eines maximalen Sitzungsratenwertes *'λ_{Ankündigung,s}^{max}'* und einer Versorgungsfunktion (*dfₛ*/*dλₛ*)*^{-1,}*, die eine Ziel-Metrik und eine Fairness-Metrik kodiert, umfasst; und
- einen Sender, der dazu konfiguriert ist, für jede Sitzung der zumindest einen Sitzung die Sitzungsrate an die Steuerung zu senden.

15. Slave-Netzwerkknoten zur Steuerung der Dienstanfrage in einem Netzwerk (100); wobei das Netzwerk eine Vielzahl von Netzwerkknoten (111-117), die dazu konfiguriert ist, einen Dienst der Quantenverschränkungserzeugung anzufordern, eine Vielzahl von Ressourcenknoten (106-108), die dazu konfiguriert ist, einen Dienst der Quantenverschränkungserzeugung zu liefern, einen Schalter (101), der die Vielzahl von Netzwerkknoten mit der Vielzahl von Ressourcenknoten koppelt, und eine Steuerung (102), die zum Steuern des Schalters konfiguriert ist, umfasst; wobei ein Teilsatz oder eine Gesamtheit der Vielzahl von Netzwerkknoten mit einer Vielzahl von Sitzungen '*S*' assoziiert ist, wobei jede Sitzung '*s*' der Vielzahl von Sitzungen mit einem Netzwerkknoten assoziiert ist, der als Master-Netzwerkknoten benannt ist, um mit der Steuerung zu kommunizieren, und ferner mit dem Slave-Netzwerkknoten assoziiert ist, um von Kommunikation mit der Steuerung abzusehen; wobei der Slave-Netzwerkknoten mit zumindest einer Sitzung der Vielzahl von Sitzungen assoziiert ist; wobei der Slave-Netzwerkknoten Folgendes umfasst:
- einen Empfänger, der zum Erhalten eines zentralen Preises *'p_{c}*(*tₙ*)*'* von der Steuerung konfiguriert ist;
- eine Kalkulationseinheit, die zum Bestimmen eines neuen Knotenpreises *'pᵤ*(*tₙ₊₁*)*'* konfiguriert ist, wobei das Bestimmen des neuen Knotenpreises eine Berechnung basierend auf einem Rückstand von zumindest einer vorherigen übertragenen Dienstanforderung zur Quantenverschränkungserzeugung aus jeder Sitzung der zumindest einen Sitzung und basierend auf zumindest einer jüngsten Ratenanforderung aus jeder Sitzung der zumindest einen Sitzung und unter Berücksichtigung einer maximal unterstützten Rate *'λᵤ'* für den Slave-Netzwerkknoten umfasst; und
- einen Sender, der, für jede Sitzung der zumindest einen Sitzung, zum Senden des neuen Knotenpreises an den jeweiligen Master-Netzwerkknoten assoziiert mit der Sitzung konfiguriert ist.

## Revendications

1. Procédé mis en œuvre par ordinateur de commande de demande de service dans un réseau (100) ; le réseau comprenant une pluralité de nœuds de réseau (111 à 117) configurés pour demander un service de génération d'enchevêtrement quantique, une pluralité de nœuds de ressources (106 à 108) configurés pour fournir un service de génération d'enchevêtrement quantique, un commutateur (101) couplant la pluralité de nœuds de réseau à la pluralité de nœuds de ressource, et un contrôleur (102) configuré pour commander le commutateur ; le procédé comprenant, au niveau du contrôleur :
- l'obtention auprès d'au moins un sous-ensemble de la pluralité de nœuds de réseau d'une pluralité de demandes de service de génération d'enchevêtrement quantique ;
- la détermination d'un prix central *'p_{c}*(*tₙ₊₁*)*'* pour le service, dans lequel la détermination du prix central pour le service comprend un calcul basé sur la pluralité obtenue de demandes de service, sur la base d'une capacité de service '*λ*_{Switch}' de la pluralité de nœuds de ressources et sur la base d'une pluralité de débits de session précédents *'λₛ*(*tₙ*)*'* et tenant compte d'un débit maximal du commutateur ; et
- la communication du prix central à au moins le sous-ensemble de la pluralité de nœuds de réseau.

2. Procédé selon la revendication 1, dans lequel le procédé comprend en outre :
- la détermination d'un calendrier d'allocation pour allouer la pluralité de nœuds de ressources à la pluralité de nœuds de réseau, sur la base d'une pluralité de débits de session obtenus auprès de la pluralité de nœuds de réseau.

3. Procédé selon l'une quelconque des revendications précédentes, dans lequel une itération initiale du prix central est fixée à zéro et une itération initiale des débits de session précédents est fixée à un débit maximal possible pour chaque session correspondante, ${λ}_{h é raut , s}^{max}$.

4. Procédé selon l'une quelconque des revendications précédentes, dans lequel la capacité de service de la pluralité de nœuds de ressources est basée sur le nombre de nœuds de ressources et est basée sur une pluralité de probabilités respectives de la pluralité de nœuds de ressources pour générer un enchevêtrement quantique.

5. Procédé selon l'une quelconque des revendications précédentes, dans lequel la pluralité de demandes de service comprennent une pluralité de demandes pour la délivrance souhaitée d'un débit moyen spécifié de génération d'enchevêtrement quantique depuis la pluralité de nœuds de ressources.

6. Procédé mis en œuvre par ordinateur de commande de demande de service dans un réseau (100) ; le réseau comprenant une pluralité de nœuds de réseau (111 à 117) configurés pour demander un service de génération d'enchevêtrement quantique, une pluralité de nœuds de ressources (106 à 108) configurés pour délivrer un service de génération d'enchevêtrement quantique, un commutateur (101) couplant la pluralité de nœuds de réseau à la pluralité de nœuds de ressource, et un contrôleur (102) configuré pour commander le commutateur ; dans lequel un sous-ensemble ou une totalité de la pluralité de nœuds de réseau est associé à une pluralité de sessions '*S*', dans lequel chaque session '*s*' de la pluralité de sessions est associée à un nœud de réseau désigné comme nœud de réseau maître pour communiquer avec le contrôleur et est en outre associée à un autre nœud de réseau désigné comme nœud de réseau esclave pour s'abstenir de communiquer avec le contrôleur ; le procédé comprenant, au niveau d'un nœud de réseau maître de la pluralité de nœuds de réseau, le nœud de réseau maître étant associé à au moins une session de la pluralité de sessions :
- l'obtention auprès du contrôleur d'un prix central *'p_{c}*(*tₙ*)*' ;* et
- pour chaque session de l'au moins une session, la réception d'un prix de nœud précédent *'p_{u'}*(*tₙ*)*'* depuis le nœud de réseau esclave respectif associé à ladite session ;
- la détermination d'un nouveau prix de nœud *'pᵤ*(*tₙ₊₁*)*',* dans lequel la détermination du nouveau prix de nœud comprend un calcul basé sur une file d'attente d'au moins une précédente demande de service transmise pour la génération d'enchevêtrement quantique de chaque session de l'au moins une session, et basé sur au moins une demande de débit la plus récente de chaque session de l'au moins une session et tenant compte d'un débit maximal pris en charge *'λᵤ'* pour le nœud de réseau ;
- pour chaque session de l'au moins une session, la détermination d'un débit de session *'λₛ*(*tₙ₊₁*)*',* dans lequel la détermination du débit de session comprend un calcul basé sur le prix central et au moins un prix de nœud précédent *'p*(*tₙ*)*'* et en tenant compte d'une valeur de débit de session minimum *'λₛ^{min}',* d'une valeur de débit de session maximale *'λ_{héraut,s}^{max,},* et d'une fonction utilitaire *'*(*dfₛ*/*dλₛ*)*⁻¹'* encodant une métrique cible et une métrique d'équité ; et
- pour chaque session de l'au moins une session, l'envoi du débit de session au contrôleur.

7. Procédé selon la revendication 6, dans lequel une itération initiale du débit de session est fixée à un débit de session maximal pour chaque session correspondante, ${λ}_{h é raut , s}^{max}$.

8. Procédé mis en œuvre par ordinateur de commande de demande de service dans un réseau (100) ; le réseau comprenant une pluralité de nœuds de réseau (111 à 117) configurés pour demander un service de génération d'enchevêtrement quantique, une pluralité de nœuds de ressources (106 à 108) configurés pour délivrer un service de génération d'enchevêtrement quantique, un commutateur (101) couplant la pluralité de nœuds de réseau à la pluralité de nœuds de ressource, et un contrôleur (102) configuré pour commander le commutateur ; dans lequel un sous-ensemble ou une totalité de la pluralité de nœuds de réseau est associé à une pluralité de sessions '*S*', dans lequel chaque session '*s*' de la pluralité de sessions est associée à un nœud de réseau désigné comme nœud de réseau maître pour communiquer avec le contrôleur et est en outre associée à un autre nœud de réseau désigné comme nœud de réseau esclave pour s'abstenir de communiquer avec le contrôleur ; le procédé comprenant, au niveau d'un nœud de réseau maître de la pluralité de nœuds de réseau, le nœud de réseau maître étant associé à au moins une session de la pluralité de sessions :
- l'obtention auprès du contrôleur d'un prix central *'p_{c}*(*tₙ*)*' ;*
- la détermination d'un nouveau prix de nœud *'pᵤ*(*tₙ₊₁*)*',* dans lequel la détermination du nouveau prix de nœud comprend un calcul basé sur une file d'attente d'au moins une précédente demande de service transmise pour la génération d'enchevêtrement quantique de chaque session de l'au moins une session, et basé sur au moins une demande de débit la plus récente de chaque session de l'au moins une session et tenant compte d'un débit maximal pris en charge *'λᵤ'* pour le nœud de réseau ; et
- pour chaque session de l'au moins une session, l'envoi du nouveau prix de nœud au nœud de réseau maître respectif associé à ladite session.

9. Procédé selon l'une quelconque des revendications précédentes, dans lequel le contrôleur est connecté de manière externe à la pluralité de nœuds de ressources de génération d'enchevêtrement quantique et comprend de manière interne uniquement des ressources non quantiques.

10. Procédé selon l'une quelconque des revendications précédentes,
dans lequel la pluralité de nœuds de ressources comprennent une pluralité de stations d'herlading ; ou
dans lequel la pluralité de nœuds de ressource comprennent une pluralité de sources de photons, et dans lequel le commutateur est configuré pour transmettre des photons, et dans lequel chaque nœud de réseau de la pluralité de nœuds de réseau comprend au moins un détecteur de photons.

11. Programme informatique comprenant des instructions configurées pour, lorsqu'elles sont exécutées par au moins un processeur, réaliser le procédé selon l'une quelconque des revendications précédentes.

12. Support de stockage lisible par ordinateur stockant le programme informatique selon la revendication 11.

13. Contrôleur (102) de commande de demande de service dans un réseau (100) ; le réseau comprenant une pluralité de nœuds de réseau (111 à 117) configurés pour demander un service de génération d'enchevêtrement quantique, une pluralité de nœuds de ressources (106 à 108) configurés pour fournir un service de génération d'enchevêtrement quantique, et un commutateur (101) couplant la pluralité de nœuds de réseau à la pluralité de nœuds de ressources ; le contrôleur comprenant :
- un récepteur configuré pour obtenir auprès d'au moins un sous-ensemble de la pluralité de nœuds de réseau une pluralité de demandes de service de génération d'enchevêtrement quantique ;
- une unité de calcul configurée pour déterminer un prix central *'p_{c}*(*tₙ₊₁*)*'* pour le service, dans lequel la détermination du prix central pour le service comprend un calcul basé sur la pluralité obtenue de demandes de service, basé sur une capacité de service '*λ*_{Switch}' de la pluralité de nœuds de ressources et basé sur une pluralité de débits de session précédents *'λₛ*(*tₙ*)*'* et tenant compte d'un débit maximal du commutateur ; et
- un émetteur configuré pour communiquer le prix central à au moins le sous-ensemble de la pluralité de nœuds de réseau.

14. Nœud de réseau maître de commande de demande de service dans un réseau (100) ; le réseau comprenant une pluralité de nœuds de réseau (111 à 117) configurés pour demander un service de génération d'enchevêtrement quantique, une pluralité de nœuds de ressources (106 à 108) configurés pour fournir un service de génération d'enchevêtrement quantique, un commutateur (101) couplant la pluralité de nœuds de réseau à la pluralité de nœuds de ressource, et un contrôleur (102) configuré pour commander le commutateur ; dans lequel un sous-ensemble ou une totalité de la pluralité de nœuds de réseau est associé à une pluralité de sessions '*S*', dans lequel chaque session '*s*' de la pluralité de sessions est associée au nœud de réseau maître pour communiquer avec le contrôleur et est en outre associé à un autre nœud de réseau désigné comme nœud de réseau esclave pour s'abstenir de communiquer avec le contrôleur ; le nœud de réseau maître étant associé à au moins une session de la pluralité de sessions ; le nœud de réseau maître comprenant :
- un récepteur configuré pour :
- obtenir auprès du contrôleur un prix central *'p_{c}*(*tₙ*)*' ;* et
- pour chaque session de l'au moins une session, recevoir un prix de nœud précédent *'p_{u'}*(*tₙ*)*'* depuis le nœud de réseau esclave respectif associé à ladite session ;
- une unité de calcul configurée pour :
- déterminer un nouveau prix de nœud *'pᵤ*(*tₙ₊₁*)*',* dans lequel la détermination du nouveau prix de nœud comprend un calcul basé sur une file d'attente d'au moins une précédente demande de service transmise pour la génération d'enchevêtrement quantique de chaque session de l'au moins une session, et basé sur au moins une demande de débit la plus récente depuis chaque session de l'au moins une session et tenant compte d'un débit maximal pris en charge *'λᵤ'* pour le nœud de réseau ; et
- pour chaque session de l'au moins une session, déterminer un débit de session *'λₛ*(*tₙ₊₁*)*',* dans lequel la détermination du débit de session comprend un calcul basé sur le prix central et au moins un prix de nœud précédent *'p*(*tₙ*)*'* et tenant compte d'une valeur de débit de session minimum *'λₛ^{min}',* d'une valeur de débit de session maximale *'λ_{héraut,s}^{max,},* et d'une fonction utilitaire *'*(*dfₛ*/*dλₛ*)*⁻¹'* encodant une métrique cible et une métrique d'équité ;
et
- un émetteur configuré pour, pour chaque session de l'au moins une session, l'envoi du débit de session au contrôleur.

15. Nœud de réseau maître de commande de demande de service dans un réseau (100) ; le réseau comprenant une pluralité de nœuds de réseau (111 à 117) configurés pour demander un service de génération d'enchevêtrement quantique, une pluralité de nœuds de ressources (106 à 108) configurés pour fournir un service de génération d'enchevêtrement quantique, un commutateur (101) couplant la pluralité de nœuds de réseau à la pluralité de nœuds de ressource, et un contrôleur (102) configuré pour commander le commutateur ; dans lequel un sous-ensemble ou une totalité de la pluralité de nœuds de réseau est associé à une pluralité de sessions '*S*', dans lequel chaque session '*s*' de la pluralité de sessions est associée à un nœud de réseau désigné comme nœud de réseau maître pour communiquer avec le contrôleur et est en outre associé au nœud de réseau esclave pour s'abstenir de communiquer avec le contrôleur ; le nœud de réseau esclave étant associé à au moins une session de la pluralité de sessions ; le nœud de réseau esclave comprenant :
- un récepteur configuré pour obtenir auprès du contrôleur un prix central *'p_{c}*(*tₙ*)*' ;*
- une unité de calcul configurée pour déterminer un nouveau prix de nœud *'pᵤ*(*tₙ₊₁*)*',* dans lequel la détermination du nouveau prix de nœud comprend un calcul basé sur une file d'attente d'au moins une précédente demande de service transmise pour la génération d'enchevêtrement quantique de chaque session de l'au moins une session, et basé sur au moins une demande de débit la plus récente de chaque session de l'au moins une session et tenant compte d'un débit maximal pris en charge *'λᵤ'* pour le nœud de réseau esclave ; et
- un émetteur configuré pour, pour chaque session de l'au moins une session, envoyer le nouveau prix de nœud au nœud de réseau maître respectif associé à ladite session.
